# EUROPEAN PATENT APPLICATION

(11) **EP 3 343 730 A1**
(43) Date of publication of application: **04.07.2018**
(21) Application number: 16207232.6
(22) Date of filing: 29.12.2016
(51) Int. Cl.: H02J 50/10, H02J 50/80, H02J 7/02, H02J 7/00

(54) **QOS OF WIRELESS CHARGING SYSTEM**

(71) Applicant: HTC Corporation, Taoyuan City 330 (TW)
(72) Inventor: Chu, Feng-Seng, 330 Taoyuan City (TW)
(74) Representative: Murgitroyd & Company

(57) **Abstract**

Disclosed is a wireless charger control method comprising: (a) acquiring identifying information for a wireless charger via a recognizing device; (b) transmitting user information and the identifying information to at least one server; (c) generating a control command to the wireless charger via the server, based on the identifying information and the user information; and (d) controlling the wireless charger to operate based on the control command.

## Description

### Background of the Invention

### 1. Field of the Invention

The present application relates to a wireless charger control method and a wireless charging system, and particularly relates to a wireless charger control method and a wireless charging system which can control a wireless charger based on identifying information for the wireless charger and user information.

### 2. Description of the Prior Art

Recently, wireless chargers are always provided in a public place. Thereby a user can charge his mobile device without carrying a corresponding wired charger with him, such that the depletion for the battery in the mobile device can be avoided. However, the maintenance cost for wireless chargers is still high, thus sufficient income is necessary for the service provider to maintain such system. One possible method to solve this issue is limiting that only members can use the wireless chargers.

Accordingly, it is important to have a mechanism to verify membership but does not cause inconvenience for users. In some stores, a password is provided to a client to turn on the wireless charger, or the membership for the user is checked one by one. However, these methods could not efficiently identify members and non-members from users.

### Summary of the Invention

Therefore, one objective of the present application is to provide a wireless charger control method, which can sufficiently manage a wireless charger.

Another objective of the present application is to provide a wireless charging system, which can sufficiently manage a wireless charger.

One embodiment of the present application discloses a wireless charger control method comprising: (a) acquiring identifying information for a wireless charger via a recognizing device; (b) transmitting user information and the identifying information to at least one server; (c) generating a control command to the wireless charger via the server, based on the identifying information and the user information; and (d) controlling the wireless charger to operate based on the control command.

Another embodiment of the present application discloses a wireless charging system comprising: a recognizing device, configured to execute an application program; and a wireless charger. The identifying information for a wireless charger is acquired by the recognizing device while the application program is executed. The recognizing device further transmits the user information and the identifying information to at least one server. The wireless charger receives a control command generated by the server based on the identifying information and the user information, and operates based on the control command.

In view of above-mentioned embodiments, the wireless charger can be efficiently managed. Thus the issue mentioned in the prior art can be solved.

These and other objectives of the present invention will no doubt become obvious to those of ordinary skill in the art after reading the following detailed description of the preferred embodiment that is illustrated in the various figures and drawings.

### Brief Description of the Drawings

FIG.1 is a block diagram illustrating a wireless charging system according to one embodiment of the present application.
FIG.2 is a schematic diagram illustrating the operation for the wireless charging system illustrated in FIG.1.
FIG.3 is a schematic diagram illustrating an example for practical application for the embodiments illustrated in FIG.1 and FIG.2.
FIG.4 and FIG.5 are schematic diagrams illustrating examples for the wireless charger illustrated in FIG.1.
FIG.6 is a block diagram illustrating a wireless charging system according to another embodiment of the present application.
FIG.7 is a schematic diagram illustrating an example for practical application for the embodiments illustrated in the first step FIG.6.

### Detailed Description

Several embodiments are provided as examples to explain the concept of the present application. Please note these embodiments are only for examples and do not mean to limit the scope of the present application. Also, the devices in following embodiments can be implemented by hardware (ex. circuit), or by hardware with software (ex. a program installed to a processor). Additionally, the term "recognizing device" and " target device" are used in following descriptions. The term "recognizing device" means a device that can recognize the user. Also, the term "target device" means a device that is to be charged. The recognizing device and the target device can be any kind of devices, for example, a mobile phone, a tablet PC, a notebook, or a smart watch.

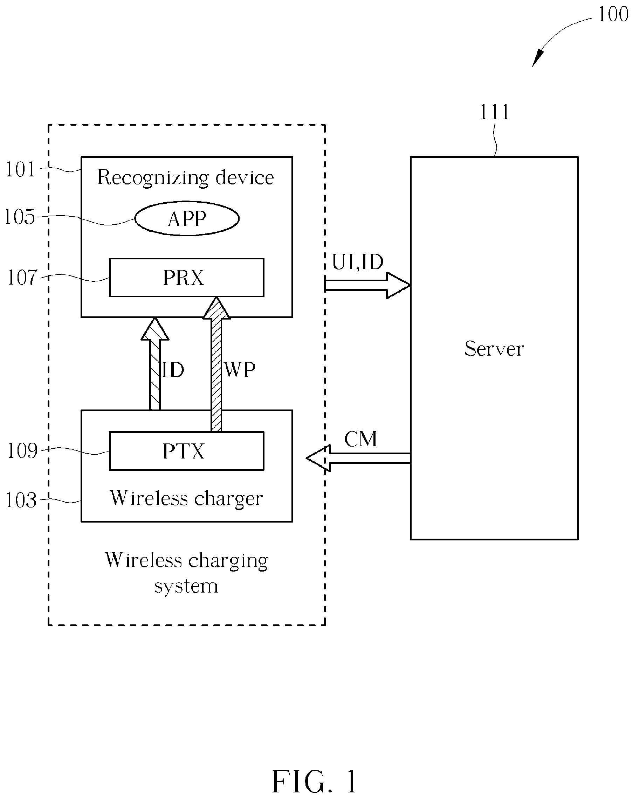

FIG.1 is a block diagram illustrating a wireless charging system according to one embodiment of the present application. Please note some conventional devices such as communication devices, processing devices and power managing devices are not illustrated here. As illustrated in FIG.1, the wireless charging system 100 comprises a recognizing device 101 and a wireless charger 103. An application program 105 is installed in the recognizing device 101, which can control the recognizing device 101 to receive identifying information ID from the wireless charger 103 and transmits user information UI and identifying information ID to the server 111. The application program 105 can be executed by a processor inside the recognizing device 101, which is not illustrated in FIG.1.

In this embodiment, the recognizing device 101 is also served as a target device. Therefore, the recognizing device 101 further comprises a wireless power receiver 107 to receive wireless power WP from the wireless charger 103.

The server 111 generates a control command CM according to the user information UI and the identifying information ID, and the wireless charger 103 operates based on the control command CM. In the embodiment illustrated in FIG.1, the wireless charger 103 comprises a wireless power transmitter 109 to provide wireless power WP to the wireless power receiver 107.

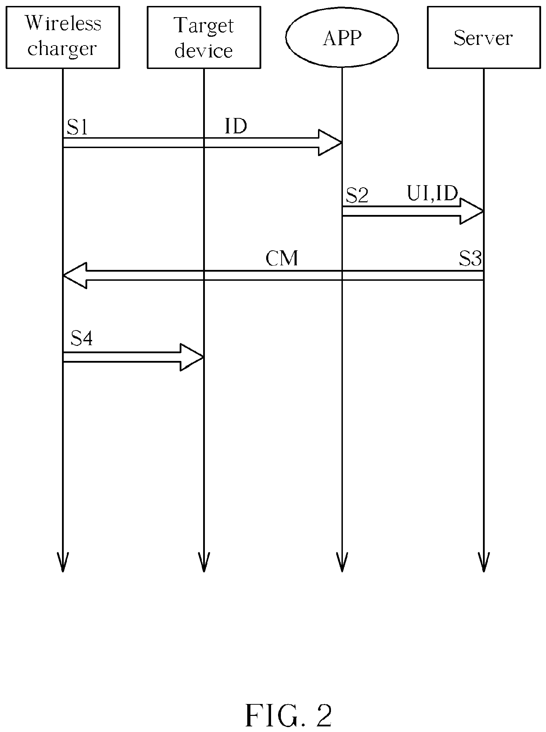

FIG.2 is a schematic diagram illustrating the operation for the wireless charging system 100 illustrated in FIG.1. As illustrated in FIG.2, in the step S1, the identifying information ID is acquired by the recognizing device 101 via the application program 105. In one embodiment, the recognizing device 101 acquires the identifying information ID via a camera. In such embodiment, a QR code or a picture with identifying information are provided for the wireless charger. In another embodiment, the recognizing device 101 acquires the identifying information ID via a wireless communication. For example, the recognizing device 101 acquires the identifying information ID from the wireless charger via Bluetooth, NFC (Near Field Communication) or wifi. In still another embodiment, the recognizing device 101 acquires the identifying information ID via inputting a serial code to the recognizing device 101. For example, the user types the wireless charger's serial number 0001 to the recognizing device.

After the recognizing device 101 receives the identifying information ID, the recognizing device 101 transmits the user information UI and the identifying information ID to the server 111 via the app program 105, in the step S2. The server 111 can be, for example, a computer or a group of computers. In one embodiment, more than one server is provided, and the server managing the user information UI and the server managing the wireless charger 103 are different.

The user information UI can be any information related with the user, for example, name, gender, birthday, email address, photo, social network account information, or membership related information such as membership level or membership fee. In the step S3, the server generates control command CM to the wireless charger 103. After that, the wireless charger 103 operates based on the control command CM in the step S4.

In one embodiment, a quality of service (QOS) for the wireless charger 103 is adjusted based on the control command CM. The quality of service indicates the service level for the wireless charger. In one embodiment, the quality of service means a power level of the wireless charger, for example, 5 Watt or 10 Watt, or even 0 Watt. In one embodiment, if the user information UI shows that the user is a member with a highest level, the wireless charger provides 10 Watt. If the user information UI shows that the user is a member with a normal level, the wireless charger provides 5 Watt. Also, if the user information UI shows that the user is not a member, the wireless charger is not activated and provides 0 Watt.

In another embodiment, the quality of service means a charging time of the wireless charger, for example, 0.5 hour or 1 hour. Similar with above-mentioned descriptions, the charging time can vary corresponding to the level of member as well. In still another embodiment, the quality of service is a size for a charging region of the wireless charger. The larger the charging region, the more target devices can be simultaneously charged. Similar with above-mentioned descriptions, the charging region can vary corresponding to the level of member as well. In still another embodiment, the quality of service is a selection for a wireless charging standard, for example, WPC v1.2.1 or WPC v1.1. Besides, in a similar embodiment, a number of devices to be charged can be changed corresponding to the level of member.

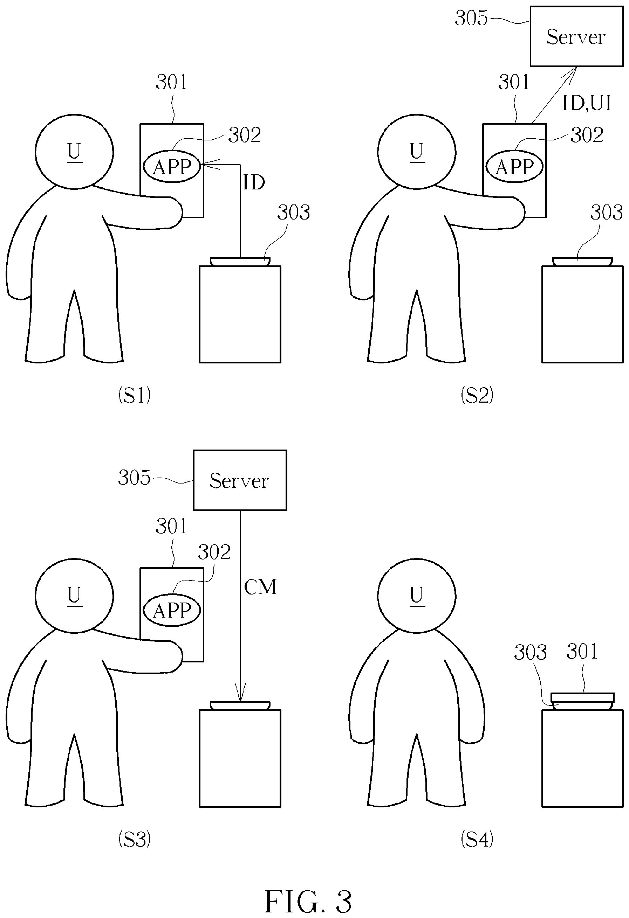

FIG.3 is a schematic diagram illustrating an example for practical application for the embodiments illustrated in the first step FIG.1 and FIG.2. Please note the steps S1, S2, S3, S4 in FIG.3 correspond to the steps S1, S2, S3, S4 in FIG.2. As illustrated in FIG.3, a user U carries a mobile phone 301 having an application program 302 with him, and finds the battery for the mobile phone 301 is low. Accordingly, the user U desires to use the wireless charger 303 to charge the mobile phone 301. In the step S1, the user U executes the application program 302 to acquire the identifying information ID for the wireless charger 303. After that, in the step S2, the user U applies the application program 302 to transmit the identifying information ID and the user information UI to a server 305. Next, in the step S3, the server 305 generates a control command CM to the wireless charger 303 according to the identifying information ID and the user information UI. Then, in the step S4, the wireless charger 303 operates based on the control command CM, thus the user can apply the wireless charger 303 to charge the mobile phone 301.

Various kinds of wireless chargers can be implemented as the wireless charger in this application. In one embodiment, the wireless charger in this application follows the standard of Wireless Power Consortium (WPC) or Air-fuel alliance (AFA).

Also, the target device in the present application can have various kinds of structures. For example, as illustrated in the description for FIG.1, the target device (recognizing device 101) comprises a wireless power receiver 107. Such wireless power receiver 107 can be embedded in the target device or an accessory connected to the target device.

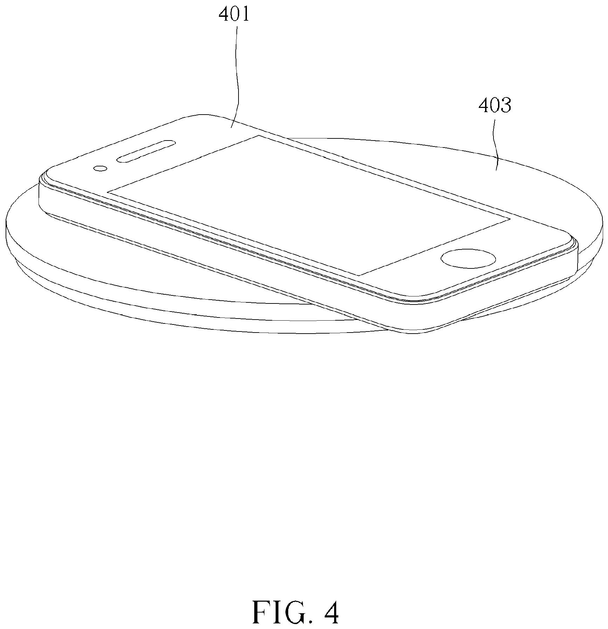

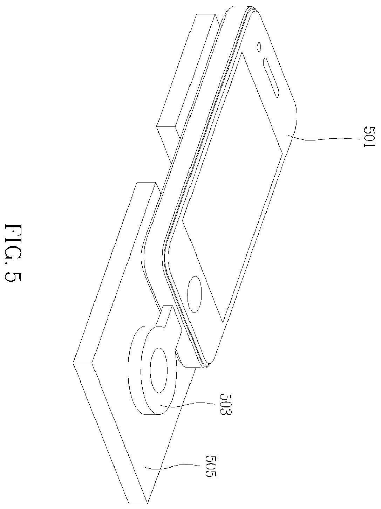

FIG.4 and FIG.5 are schematic diagrams illustrating examples for the wireless charger illustrated in FIG.1. As illustrated in FIG.4, the target device is a mobile phone 401 comprises a wireless power receiver embedded therein. Accordingly, the mobile phone 401 can be directly put on the wireless charger 403, or put in a location closed to the wireless charger 403, and then charged.

In FIG.5, the wireless power receiver is an external accessory rather than embedded in the target device. As illustrated in FIG.5, the wireless power receiver is an accessory 503 which can be connected to the mobile phone 501 or removed from the mobile phone 501. In such embodiment, while the mobile phone 501 is being charged, the accessory 503 is put on the wireless charger 505, or put in a location closed to the wireless charger 505, and then charged. The accessory 503 can be connected to the mobile phone 501 via different interfaces, for example, a micro-usb interface, a lightening interface, or a USB type C interface.

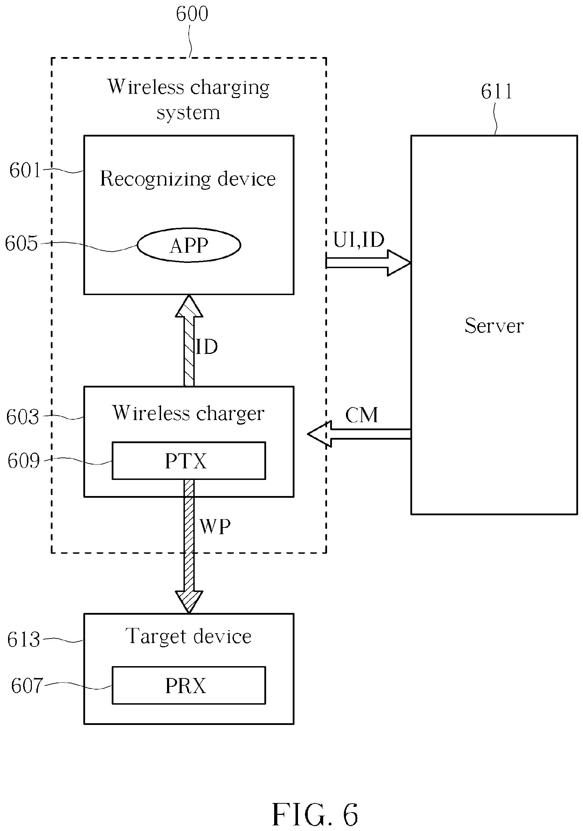

Additionally, in above-mentioned embodiments, the recognizing device and the target device are the same device. However, the recognizing device and the target device can be different devices. FIG.6 is a block diagram illustrating a wireless charging system according to another embodiment of the present application. In this embodiment, the recognizing device and the target device are different devices. For more detail, as illustrated in FIG.6, the wireless charging system 600 comprises a recognizing device 601 and a wireless charger 603. An application program 605 is installed in the recognizing device 601, which can control the recognizing device 601 to receive identifying information ID from the wireless charger 603 and transmits user information UI and identifying information ID to the server 611.

The server 611 generates a control command CM according to the user information UI and the identifying information ID. The wireless charger 603 operates based on the control command CM. In one embodiment, the wireless charger 603 operates based on the control command CM to provide wireless power WP to the target device 613, which is different from the recognizing device 601. Accordingly, the wireless charger 603 comprises a wireless power transmitter 609 to provide wireless power WP to the wireless power receiver 607 provided in the target device 613. The operation for the embodiment of FIG.6 can be clearly understood according to FIG.2, thus related description it is omitted for brevity here.

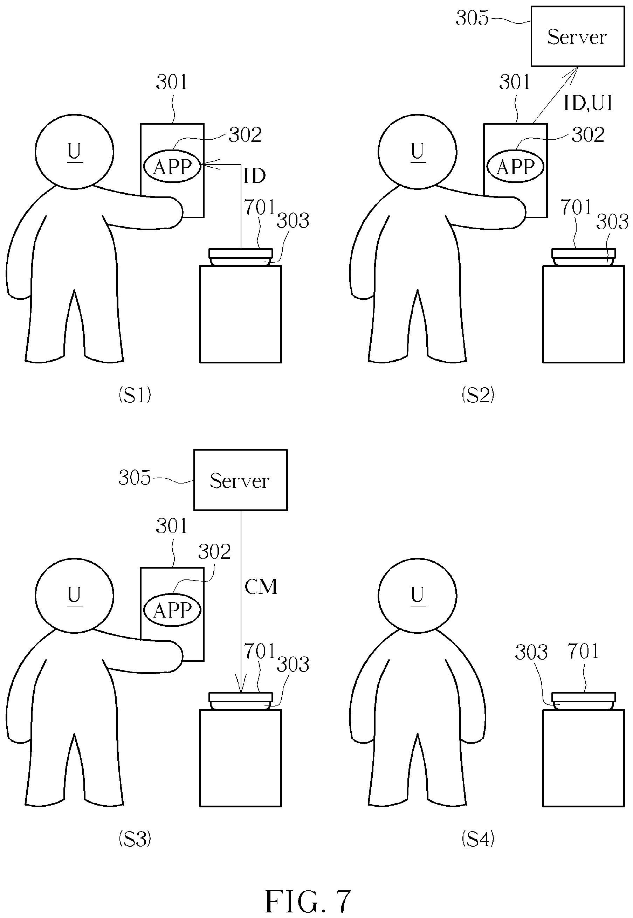

FIG.7 is a schematic diagram illustrating an example for practical application for the embodiments illustrated in the first step FIG.6. Please note the steps S1, S2, S3, S4 in FIG.7 correspond to the steps S1, S2, S3, S4 in FIG.2. As illustrated in FIG.7, a user U carries a mobile phone 301 having an application program 302 (the recognizing device) and a table PC 701 (the target device) with him, and finds the battery of the table PC 701 is low. Accordingly, the user U desires to use the wireless charger 303 to charge the table PC 701. In the step S1, the user U executes the application program 302 to acquire the identifying information ID for the wireless charger 303. After that, in the step S2, the user U applies the application program 302 to transmit the identifying information ID and the user information UI to a server 305. Next, in the step S3, the server 305 generates a control command CM to the wireless charger 303 according to the identifying information ID and the user information UI. Then, in the step S4, the wireless charger 303 operates based on the control command CM, thus the user can apply the wireless charger 303 to charge the table PC 701. It will be appreciated that the recognizing device is not limited to a device that is carried by the user. For example, the wireless charger is provided in a store, which also provides a computer as the recognizing device.

In view of above-mentioned embodiments, a wireless charger control method can be acquired, which comprises the following steps: (a) acquiring identifying information (ex. ID in FIG.1) for a wireless charger (ex. 103 in FIG.1) via a recognizing device (ex. 101 in FIG.1); (b) transmitting user information (ex. UI in FIG.1) and the identifying information to at least one server (ex. 111 in FIG.1); (c) generating a control command (ex. CM in FIG.1) to the wireless charger via the server, based on the identifying information and the user information; and (d) controlling the wireless charger to operate based on the control command.

In view of above-mentioned embodiments, the wireless charger can be efficiently managed. Thus the issue mentioned in the prior art can be solved.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A wireless charger control method, comprising:
(a) acquiring identifying information for a wireless charger via a recognizing device;
(b) transmitting user information and the identifying information to at least one server;
(c) generating a control command to the wireless charger via the server, based on the identifying information and the user information; and
(d) controlling the wireless charger to operate based on the control command.

2. The wireless charger control method of claim 1, wherein the step (a) acquires the identifying information via a camera or wireless communication.

3. The wireless charger control method of claim 1, wherein the step (a) acquires the identifying information via inputting a serial code to the recognizing device.

4. The wireless charger control method according to any one of the preceding claims, wherein the step (d)adjusts a quality of service for the wireless charger based on the control command.

5. The wireless charger control method of claim 4, wherein the quality of service is a power level, a charging time or a selection for a wireless charging standard.

6. The wireless charger control method of claim 4, wherein the quality of service is a size for a charging region of the wireless charger or a number of devices to be charged.

7. The wireless charger control method according to any one of the preceding claims, further comprising: controlling the wireless charger based on the control command to charge the recognizing device.

8. The wireless charger control method according to any one of the preceding claims, further comprising: controlling the wireless charger based on the control command to charge a target device different from the recognizing device.

9. A wireless charging system, comprising:
a recognizing device, configured to execute an application program; and
a wireless charger;
wherein identifying information for a wireless charger is acquired by the recognizing device while the application program is executed;
wherein the recognizing device further transmits the user information and the identifying information to at least one server;
wherein the wireless charger receives a control command generated by the server based on the identifying information and the user information, and operates based on the control command.

10. The wireless charging system of claim 9, wherein the recognizing device acquires the identifying information via a camera or wireless communication.

11. The wireless charging system of claim 9, wherein the recognizing device acquires the identifying information via inputting a serial code to the recognizing device.

12. The wireless charging system according to any one of the preceding claims 9 to 11, wherein the wireless charger adjusts a quality of service thereof based on the control command.

13. The wireless charging system of claim 12, wherein the quality of service is a power level, a charging time or a selection for a wireless charging standard.

14. The wireless charging system of claim 12, wherein the quality of service is a size for a charging region of the wireless charger or a number of devices to be charged.

15. The wireless charging system according to any one of the preceding claims 9 to 14, wherein the wireless charger charges the recognizing device based on the control command or the wireless charger charges a target device different from the recognizing device based on the control command..
